# EUROPÄISCHE PATENTSCHRIFT

(11) **EP 1 225 036 B1**
(45) Veröffentlichungstag und Bekanntmachung des Hinweises auf die Patenterteilung: **27.10.2004**
(21) Anmeldenummer: 01100951.1
(22) Anmeldetag: 17.01.2001
(51) Int. Cl.: B32B 25/08, C08J 7/04, B29C 45/16, C08L 53/02

(54) **Verbundkörper**
Composite article
Elément composite

(43) Veröffentlichungstag der Anmeldung: 24.07.2002
(73) Patentinhaber: Ponachem AG, 22761 Hamburg (DE); E.I. DU PONT DE NEMOURS AND COMPANY, Wilmington, Delaware 19898 (US)
(72) Erfinder: Eickhoff, Norbert Dipl.Ing, Dipl.Wirt.-Ing., 28213 Bremen (DE); Stelzer, Olaf Dipl.-Ing., 19057 Schwerin (DE); Greulich, Stefan, 1227 Carouge, Geneva (CH); Kirberg, Karl-Wilhelm, 61267 Neu-Anspach (DE)
(74) Vertreter: Fleck, Thomas, Dr. Dipl.-Chem.

(56) Entgegenhaltungen:
- EP-A- 0 863 184
- WO-A-00/20204

## Beschreibung

Die Erfindung betrifft einen Verbundkörper nach dem Oberbegriff des Hauptanspruches, sowie ein Verfahren zu seiner Herstellung.

Ein derartiger Verbundkörper und auch sein Herstellungsverfahren werden beispielsweise in der WO 00/20204 und der DE 198 45 235 beschrieben. Diese vorbekannten Lehren fordern den Einsatz eines relativ teuren, bei der Compoundierung aufwendigen nicht-olefinischen Thermoplastmaterials in Form von Polyesterurethan-Elastomeren, Polyetherurethan-Elastomeren, Polyestern, Polyamiden, Polycarbonaten, Polyàcrylaten etc.. Eine angeblich deutliche Verbesserung der Haftung zwischen POM und Elastomeren des Typs TPE-S sollte hierdurch erzielt werden. Diese Werkstoffpaarung wurde auch schon bei verschiedenen Fachtagungen präsentiert, so z.B. "thermoplastische Elastomere" im SKZ Würzburg, Mai 1999 und Juni 2000, in denen jedoch die mechanischen Eigenschaften, die Beständigkeit und die Verbund-Haftungswerte nach allgemeinen Kenntnisstand für viele Anwendungsfälle als zu gering bewertet wurden. Auch wurde nach der vorbekannten Lehre schon das Mehrkomponentenspritzgußverfahren zur Herstellung des Verbundkörpers erwähnt, welches sich einer ständig wachsenden Nachfrage erfreut, da die Eigenschaften von harten und weichen Werkstoffen in einem Verbundkörper in einem Fertigungsschritt zu vereinen sind.

Die Kombination von POM mit TPE-S ist von besonderem Interesse, da beide Werkstoffe eine Reihe von einzigartigen Eigenschaften auszeichnen.

Das POM ist bekannt für:
- hervorragende mechanische Eigenschaften (hohe Zugfestigkeit, Schlagfestigkeit, Steifigkeit, Ermüdungsfestigkeit)
- ausgezeichnete Beständigkeit gegen Feuchtigkeit, Kraftstoff, Schmier-, Lösungsmittel, neutrale Chemikalien
- ausgezeichnete Maßhaltigkeit
- gute elektrische Isoliereigenschaften
- Kriechfestigkeit
- geringe Reibung
- breiter Betriebstemperaturbereich.

Das Polyoxymethylen wird in der Automobil-, Haushaltsgeräte-, Installations-, Maschinenbau-, Werkzeug-, Elektronik- und Verbrauchsgüterindustrie eingesetzt. Besonders hervorzuheben ist bedingt durch seine Gleit-Reib-Eigenschaften der Einsatz für viele bewegte Teile, wie Getriebeteile, Umlenkrollen, Zahnräder oder Verstellhebel, sowie bedingt durch seine ausgezeichnete Rückstellelastizität der Einsatz für Schnappverbindungen.

Das TPE ist bekannt für:
- sehr variabler Härtebereich (Shore A = 10 bis Shore D = 60)
- geringe Dichte
- hohes Rückstellvermögen
- hervorragende mechanische Eigenschaften
- hohe Geräuschdämpfung
- gute Alterungseigenschaften und hervorragende Ozoneigenschaften
- großer Flexibilitätsbereich und vergleichsweise kleine Flexibilitätsänderung in einem breiten Betriebstemperaturbereich
- gute Beständigkeit gegen Säuren und Laugen
- sehr gute Haftreibung.

Das thermoplastische Styrol-Elastomer findet in gleichen/ähnlichen Industriezweigen wie das Polyoxymethylen (u.a. Automobilbereich, Haushaltgeräteindustrie) Anwendung.

Insbesondere besteht also Bedarf an einer Kombination von Polyoxymethylen (POM) und einem oder mehreren thermoplastischen Styrol-Elastomeren (hydriertes Styrol-Block-Copolymer), bei dem die Haftung zwischen den beiden Komponenten gegenüber dem Stand der Technik stark verbessert wird und somit einen breiten Einsatz einer Kombination POM/TPE-S im Mehrkomponentenspritzguß erlaubt, ohne daß mechanische Verankerungen, wie z.B. aufwendige Hinterschnitte, erforderlich sind.

Der Erfindung liegt deshalb die Aufgabe zugrunde, den eingangs genannten Verbundkörper derart zu verbessern, daß mit ihm eine Vielzahl von Anwendungen erschlossen werden kann, in denen die Kombination der speziellen Eigenschaften dieser beiden Werkstoffe vorteilhaft ist, wie z.B. bei Befestigungsclipsen mit angeformerter hervorragender Dichtung z.B. im Fahrzeugbau, Befestigungselemente mit Dämpfungsfunktion z.B. für Kaftstoffleitungen, Schiebeschalter mit rutschfester Grifffläche, Gehäuse für Türschlösser mit angespritzter Dichtung, allg. Soft-touch-Oberflächen auf POM Teilen mit ausgezeichneter Haptik.

Überraschenderweise wird diese Aufgabe durch den im Anspruch 1 gekennzeichneten Verbundkörper gelöst.

Das TPE-S im Verbundkörper nach dieser Erfindung basiert also auf einem hydrierten Styrol-Block-Copolymer, welches als hydrierter Poly-Isopren/Butadien-Kautschuk (SEEPS) oder als hydrierter Poly-Butadien-Kautschuk (SEBS) vorliegen kann und folgende Stoffe enthält die zur Verbesserung der Haftung zu POM führen:
Styrol/Btadien-Copolymer (SBS) und/oder
Ethylen-Vinylacetat-Copolymer (EVA).

Die Modifikationen können dem Compound allein oder auch in Kombination zugeführt werden.
Zwar sind diese im TPE gemachten Modifikationen für die Haftvermittlung allgemein bekannt, jedoch ist nirgends eine verbesserte Haftung zu POM beschrieben, so daß man mit einem derartig positiven Effekt im Hinblick auf POM nicht rechnen konnte. Vielmehr ist es als überraschend anzusehen, daß diese Modifikation nicht nur die angestrebte Verbesserung im Verbund zu styrolischen Thermoplasten, sondern auch eine sehr gute Haftung auf POM bringt.

Das gemäß dieser Erfindung am Verbundkörper beteiligte POM gehört zu der Gruppe der allgemein bekannten Polyoxymethylene, die entweder aus dem Homopolymerisat des Formaldehyd oder dem Copolymerisat aus dem Formaldehyd oder seinen cyclischen Oligomeren und cyclischen Ethern, cyclischen Acetalen und/oder linearen Acetalen aufgebaut sind und weist generell einen Schmelzindex (MFR gemäß ISO1133) zwischen 0.5 und 75g/10 min auf.

Es können vorteilhafterweise auch modifizierte Typen des POM gleichzeitig verwendet werden, was bevorzugt wird, wie z.B. Mischungen von POM mit einem oder mehreren der folgenden Polymeren:
TPE-U,
Styrol/Butadien-Copolymer (SBS),
Ethylen-Vinylacetat-Copolymer (EVA),
hydriertes Styrol-Block-Copolymer basierend auf einem hydrierten Poly-Isopren/Butadien-Kautschuk (SEEPS),
hydriertes Styrol-Block-Copolymer basierend auf einem hydrierten Poly-Isopren-Kautschuk (SEPS),
hydrierter Styrol-Block-Copolymer basierend auf einem hydrierten Poly-Butadien-Kautschuk (SEBS),
Compound auf Basis eines hydrierten Styrol-Block-Copolymers, der als hydrierter Poly-Isopren/Butadien-Kautschuk bzw. als hydrierter Poly-Isopren-Kautschuk (SEPS) bzw. als hydrierter Poly-Butadien-Kautschuk (SEBS) vorliegen kann,
olefinische Werkstoffe wie PE, PP,
Polystyrol (PS),
ABS, PC, SAN.

Durch die Auswahl der Mischungskomponenten im POM kann die Haftung zu dem TPE-S entsprechend dessen Zusammensetzung weiter optimiert werden.

Es dürfte einleuchten, daß ein Compound zur Herstellung des erfindungsgemäßen Verbundkörpers neben den genannten Modifikatoren zusätzlich noch andere typische Zusatzstoffe enthalten wie paraffinische Weichmacheröl für Kautschuk, Additive/Stabilisatoren (u.a. Wärmestabilisator, Antioxydantien, Alterungsschutzmittel, Ozonschutzmittel, Verarbeitungshilfsmittel). Ferner können noch thermoplastische Werkstoffe (u.a. Olefine, Styrole) und Füllstoffe (u.a. Calciumcarbonat) im Compound enthalten sein.

Die Herstellung des erfindungsgemäßen Verbundkörpers erfolgt im Mehrkomponenten-Spritzgußverfahren in einstufiger Form (u.a. per Dreh-, Indexplatten-, Schieber-, Umsetz-, Koinjektions-/Sandwichtechnik) bzw. in mehrstufiger Form (Einlegeverfahren) oder im Mehrkomponenten-Extrusionsverfahren (u.a. Koextrusion).
In der Regel wird zuerst die harte Werkstoffkomponente (Polyoxymethylen) in das Spritzgießwerkzeug eingespritzt. Danach wird die Hartkomponente im einstufigen Verfahren mittels Dreh-, Indexplatten-, Schieber- bzw. Umsetztechnik zur anderen Spritzeinheit bewegt und die Weichkomponente aufgespritzt. Eine weitere Möglichkeit bildet das zweistufige Verfahren, in dem die vorher gespritzte Hartkomponente in das Werkzeug per Hand bzw. per Handlingseinrichtung eingelegt und dann die Weichkomponente aufgespritzt wird. Die umgekehrte Vorgehensweise, das Aufspritzen der Hartkomponente auf die Weichkomponente, ist auch mit den eben beschriebenen Verfahren möglich. Weiterhin ist das Verbinden von Polyoxymethylen mit einem thermoplastischen Styrol-Elastomer in Form des Coinjektions-/Sandwich-Verfahrens möglich.

Im folgenden werden verschiedene Verbundhaftungsversuche mit Produkten des Standes der Technik im Vergleich zu den erfindungsgemäß zusammengesetzten Verbundkörpern beschrieben.

Bezogen auf 100 Teile Kautschuk (Styrol-Block-Copolymer) sind folgende Anteile im Compound enthalten:

| | |
|---|---|
| Weichmachter Öl | ≥10Teile |
| Fullstoff | ≥10Teile |
| Thermoplast | ≥10Teile |
| Additive | ≥1Teile |

Bei den Rezepturen handelt es sich um erfindungsgemäße Compounds auf Basis SEEPS, die sich durch Zugabe von Komponenten unterscheiden die noch nicht für einen derartigen Zweck verwendet wurden:
1-50 Gew.% SBS
1-50 Gew.% EVA wie z.B. EVA 28/05
oder eine Kombination aus beiden.

Aus diesen Versuchsreihen geht deutlich hervor, daß die erfindungsgemäßen Modifikationen des TPE allein bereits zu einer deutlichen Verbesserung des Verbundes zu nichtmodifizierten POM führen.

Bei den in der Tabelle angegebenen Werten, die sich auf die Haftung an der Verbundstelle beziehen, ist zu beachten, daß diese nicht mit anders ermittelten Angaben vergleichbar sind, da es noch keine einheitlich anerkannte Prüfmethode gibt. Daher ist ein quantitativer Vergleich nur intern möglich. Weiterhin hat das Herstellungsverfahren einen großen Einfluß auf die Meßwerte. Dies wird auch dadurch deutlich, daß die im 2K-Verfahren hergestellten Prüfkörper (Tabelle 1) deutlich höhere Werte ergeben, als die im Insertmoulding hergestellten Prüfkörper. Somit können diese Zahlen nur zu internen qualitativen Vergleich herangezogen werden. So lassen sich auch die in Klammern angegebenen Werte nicht mit denen ohne Klammer direkt vergleichen.

Bekanntermaßen wird der Verbund in der Regel verbessert, wenn beide Materialien eine gemeinsame oder ähnliche Komponente enthalten. Die Problematik liegt jedoch häufig in einer Unverträglichkeit dieser Komponente zu dem einen oder anderen Werkstoff, wobei die Härte einen wesentlichen Einfluß auf den Haftverbund hat. Um eine Vergleichbarkeit der Werte zu ermöglichen, ist letztendlich auf eine Übereinstimmung und Optimierung aller Parameter zu achten.

Es zeigte sich, daß eine geringe Zugabe von SBS oder die geringe Zugabe eines TPE-Compounds wie z.B. Ponaflex S 660AD1 zum POM, eine deutliche Verbesserung des Verbundes bringen und eine gute Verträglichkeit aufweisen. Weiterhin zeigte sich, daß die Zugabe von EVA zum TPE-Compound die Haftung um bis zu 20% verbessert. In einem weiteren Schritt wurde versucht, die Haftung verbessernden Komponenten auf einem 2-Schneckenextruder sowohl in das TPE als auch in das POM einzucompoundieren. Aus diesen Versuchsreihen haben sich die in der Tabelle aufgeführten Modifikationen als optimale Compounds mit guter Haftung ohne nennenswerte Einschränkung der typischen Eigenschaften ergeben.

So haben verschiedene experimentelle Verbundhaftungsversuche mit einem TPE, nämlich SEPS (TPE 1) und POM Homopolymer mit MFI=15 (POM-1) in jeder Weise zu unzufrieden stellenden Ergebnissen geführt: es wurde überhaupt keine Haftung zwischen diesen Stoffen erzielt (siehe Tabelle 1).

Die gleichen unzureichenden Ergebnisse wurden bei gleichem POM mit SEBS (TPE 4) (Shorehärte A = 35 bis 45) festgestellt (siehe Tabelle 1).

Ferner wurde versucht, SEPS (TPE-1) mit POM Copolymer mit MFI=9 (POM-5) zu verbinden. Auch hier wurde unabhängig vom ein- oder zweistufigen Mehrkomponentenspritzgußverfahren wiederum keine Haftung beobachtet (siehe Tabelle 1).

Eine mangelhafte Haftung bei einstufigen Mehrkomponentenspritzgußverfahren wurde ebenfalls beobachtet, als das SEPS des zuletzt erwähnten Versuches durch SEBS ersetzt wurde.

Erst als das aufwendigere zweistufige Mehrkomponentenspritzgußverfahren hier zum Einsatz kam, konnte etwas Haftung mit einem Reisfestigkeitswert von 0,33 N/mm² festgestellt werden.

Überraschenderweise hat sich dann jedoch gezeigt, daß bei Einsatz haftmodifizierter TPE's eine hervorragende Verbindungshaftung zu unterschiedlichen POM's erzielt werden kann. Wenn diese ebenfalls haftmodifiziert sind, was jedoch nicht zwingend erforderlich ist, werden besonders gute Ergebnisse erzielt, wie die in Tabelle 1 dazu aufgeführten Werte und die Kombination der Stoffe, die unterhalb der Tabelle angegeben sind, zeigen.

Dieser Prüfstab wurde hergestellt indem in einem ersten Schritt die Kavität für die Schultern des Zugstabes mit dem härteren POM-Material gefüllt wurden. Die Temperatur der Schmelze ist typischerweise 215°C (205°C für Copolymer). Nach Erstarren der Schmelze wird das Werkzeug geöffnet und gedreht und nach dem Verschließen wird im zweiten Schritt das weiche TPE-S Material eingespritzt, welches eine Massetemperatur von 210°C besitzt. Nach Erstarren dieser Schmelze kann der Verbundkörper entformt werden.

Die Werkzeugtemperatur liegt in diesem Versuch 40°C, kann jedoch variiert werden um die Maßhaltigkeit und Auswerfbarkeit der Teile zu beeinflussen. Ebenso können alle weiteren Prozeßparameter wie Einspritzdruck, Nachdruck, Einspritzgeschwindigkeit, Nachdruckzeit je nach Materialkombination optimiert werden. Bei ausreichender Haftung entsteht somit ein 2-Komponentenzugstab, der die Materialfolge Hart-Weich-Hart besitzt. Dieser wird in einer Standardprüfmaschine auf Zug getestet. Die gemessene Kraft F (in N) bzw. Spannung (in MPa) ist ein Maß für die Haftung zwischen den beiden Materialien.

Beim 2-stufigen Verfahren wird zunächst die harte Komponente gespritzt. Diese wird in einem zweiten Schritt in kaltem Zustand in das Werkzeug eingelegt. Anschließend wird die weiche Komponente an das kalte Einlegeteil angespritzt.

Ist die Haftung zwischen den Komponenten nicht groß genug, kann das Mehrkomponententeil nicht zerstörungsfrei entformt werden. In diesem Fall wird in der Tabelle "keine Haftung" angegeben.

**Tabelle 1**

| | TPE-1 | TPE-2 | TPE-3 | TPE-4 |
|---|---|---|---|---|
| POM-1 | Keine Haftung | 1.4 (0.91) | - (0.24) | Keine Haftung |
| POM-2 | Keine Haftung | 1.5 (0.91) | (0.60) | - |
| POM-3 | Keine Haftung | 1.5 (0.91) | (0.71) | (0.44) |
| POM-4 | Keine Haftung | 1.2 () | (0.90) | |
| POM-5 | Keine Haftung | - (0.95) | | Keine Haftung (0.33) |
| POM-6 | | 1.5 (0.97) | - (0.76) | |
| POM-7 | | 0.8 (0.80) | - (0.78) | |

Tabelle 1: Ergebnisse für Verbundhaftung [N/mm²] verschiedener hart/weich Kombinationen von POM und TPE-S ermittelt auf 2-Komponenten-Zugstäben hergestellt im einstufigen Mehrkomponentenspritzguß (Werte in Klammern hergestellt im zweistufigen Mehrkomponentenspritzguß, Insert moulding).
POM-1: POM Homopolymer mit MFI 15; keine Modifizierung POM-2: POM Homopolymer mit MFI=12; Modifizierung mit 10% teilaromatischem Polyester TPE-U aus 4,4'-Methyldiphenyldiisocyanat, 1,4-Butandiol und Polybutylenadipat (z.B. US 5,286,807 oder US 4,804,716)
POM-3: POM Homopolymer MFI=15; Modifizierung mit 10% Styrol/Butadien Copolymer
POM-4: POM Homopolymer MFI=15; 10% TPE-S Compound (Ponaflex S 660 AD1)
POM-5: POM Copolymer mit MFI=9; keine Modifizierung (Produkt der Firma Ticona Hostaform C9021 NC)
POM-6: POM Homopolymer MFI=15; Modifizierung mit 5% SEEPS und 5% SBS
POM-7: POM Homopolymer MFI=15; Modifizierung mit 10% Ethylenvinylacetat (EVA 28/05)
POM-8: POM Homopolymer mit MFI=2.1; Modifizierung mit 15% teilaromatisches Polyester TPE-U aus 4,4'-Methyldiphenyldiisocyanat, 1,4-butandiol und Polybutylenadipat
POM-9: POM Homopolymer mit MFI=1.9; Modifizierung mit 30% teilaromatisches Polyester TPE-U aus 4,4'-Methyldiphenyldiisocyanat, 1,4-butandiol und Polybutylendipat
POM-10: POM Homopolymer MFI=15; Modifizierung mit 1% Styrol/Butadien Copolymer
POM-11: POM Homopolymer MFI=15; Modifizierung mit 1% Ethylenvinylacetat (EVA 28/05)
POM-12: POM Homopolymer MFI=15; Modifizierung mit 10% SEEPS
POM-13: POM Homopolymer MFI=15; 5% TPE-S Compound (Ponaflex S 660 AD1)+ 5% SEEPS
POM-14: POM Homopolymer MFI=15; Modifizierung mit 5% Ethylenvinylacetat (EVA 28/05)+ 5% SEEPS
POM-15: POM Homopolymer MFI=15; Modifizierung mit 1% SEEPS
TPE-1: SEPS Compound: keine Modifizierung, Shore A=60, (Ponaflex S 67660 B-LOH-G)
TPE-2: SEPS Compound: Modifizierung mit SBS Shore A=50 (Ponaflex S 650 A)
TPE-3: SEPS Compound: Modifizierung mit EVA Shore A=60 (Ponaflex S 660 AD1)
TPE-4: SEBS Compound der Firma Kraiburg TC4 HAZ Shore A=35-45

Ferner wird noch eine Tabelle 2 mit unterschiedlichen Verbundversuchen aufgeführt. Diese Tabelle 2 zeigt auszugsweise die Ergebnisse einer umfangreicheren Versuchsreihe. Aus dieser erwiesen sich die TPE-Typen S 650 A (a), S 660 AD (b), und S 260 AD (c) als besonders geeignet. Die anderen Typen weisen entweder keine ausreichende Haftung auf, oder erfüllen nicht die angestrebten Eigenschaften.

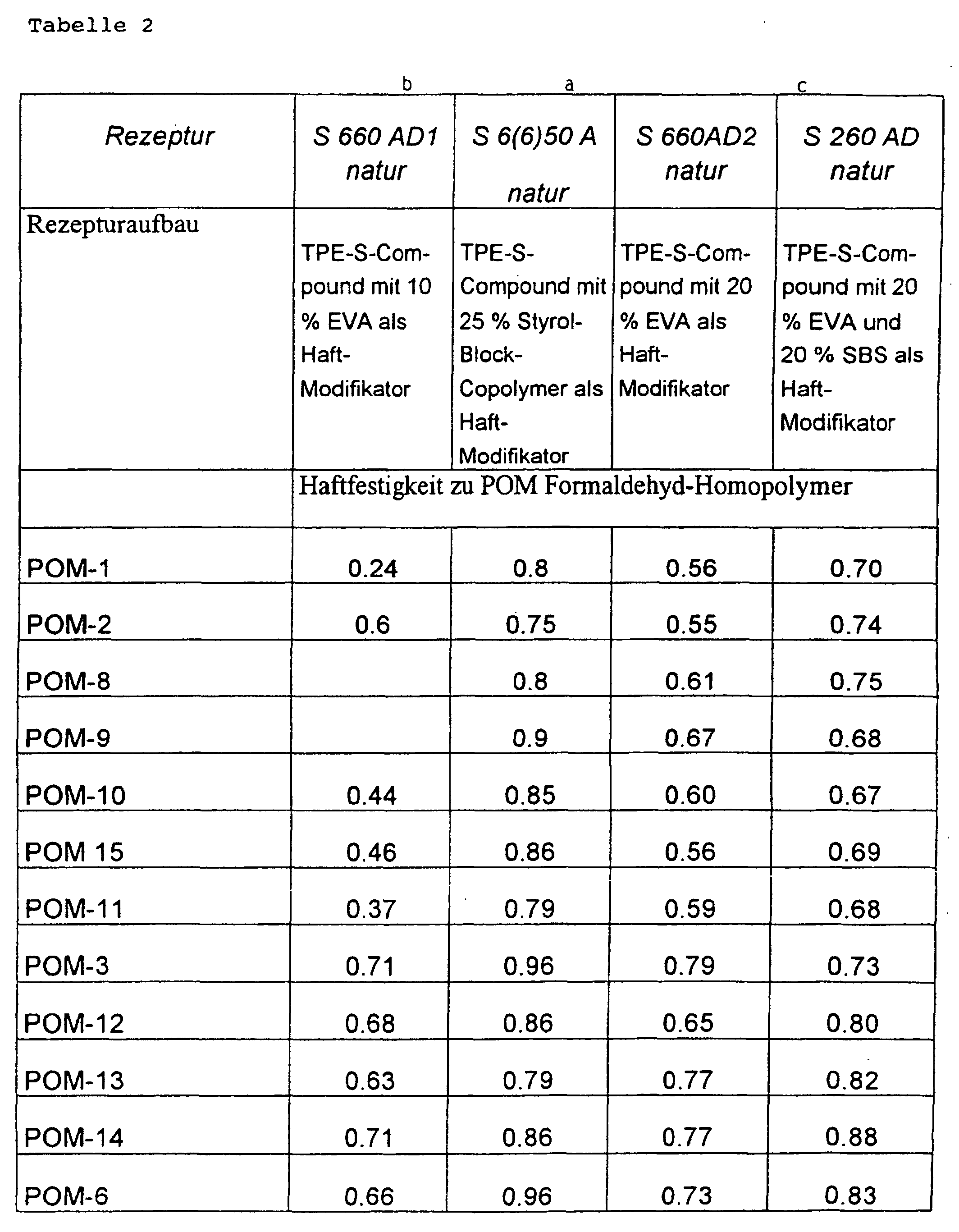

Zur Modifikation des POM wurden folgende Stoffe untersucht:
- TPU: 1-40 Gew.%
- Styrol-Block-Copolymer (SBs, SEBS, SEPS o. SEEPS): 1-40 Gew.%
- EVA: 1-40 Gew.%
- TPE-Compound (z.B. Ponaflex S 67960M): 1-40 Gew.%
- Hydriertes Styrol-Block Copolymer: 1-40 Gew.%

## Patentansprüche

1. Verbundkörper, umfassend:
eine harte Komponente (a) aus einem Polyacetal, nämlich Polyoxymethylen und
eine weiche Komponente (b) aus einem oder mehreren thermoplastischen Styrol-Elastomeren, nämlich hydrierte(s) Styrol-Block-Copolymer(en), die direkt an die Komponente (a) angeformt ist, wobei
das bzw. die Styrol-Block-Copolymer(e) Poly-Isopren/Butadien Polymer(e) und/oder Poly-Butadien Polymer(e)darstellen,
und die Styrol-Block-Copolymer(e) haftmodifiziert sind, **dadurch gekennzeichnet, daß**
als Modifikatoren des bzw. der Styrol-Block-Copolymer(en)
Styrol/Butadien-Copolymer und/oder Ethylen-Vinylacetat-Copolymer zugesetzt sind.

2. Verbundkörper nach Anspruch 1, **dadurch gekennzeichnet, daß** als Modifikatoren des Polyoxymethylens einer oder mehrere der folgenden Stoffe zugesetzt sind:
Styrol/Butadien-Copolymer (SBS),
Ethylen-Vinylacetat-Copolymer (EVA),
hydriertes Styrol-Block-Copolymer basierend auf einem hydrierten Poly-Isopren/Butadien-Kautschuk (SEEPS),
hydriertes Styrol-Block-Copolymer basierend auf einem hydrierten Poly-Isopren-Kautschuk (SEPS),
hydrierter Styrol-Block-Copolymer basierend auf einem hydrierten Poly-Butadien-Kautschuk (SEBS),
Compound auf Basis eines hydrierten Styrol-Block-Copolymers, der als hydrierter Poly-Isopren/Butadien-Kautschuk bzw. als hydrierter Poly-Isopren-Kautschuk (SEPS) bzw. als hydrierter Poly-Butadien-Kautschuk (SEBS) vorliegen kann,
olefinische Substanzen wie PE, PP,
Polystyrol (PS) ABS, PC, SAN, TPE-U.

3. Verbundkörper nach Anspruch 2, **dadurch gekennzeichnet, daß** das POM aus Formaldehyd-Homopolymerisat oder Formaldehyd-Copolymerisat oder seinen cyclischen Oligomeren und cyclischen Ethern, cyclischen Acetalen und/oder linearen Acetalen aufgebaut ist.

4. Verbundkörper nach Anspruch 3, **dadurch gekennzeichnet, daß** das POM einen Schmelzindex (MFR gemäß ISO1133) zwischen 0,5 und 75g/10 min. aufweist.

5. Verbundkörper nach einem oder mehreren der vorstehenden Ansprüche, **dadurch gekennzeichnet, daß** die Modifikatoren des bzw. der Styrol-Block-Copolymer(en) oder des Polyoxymethylens in einem Gewichtsbereich von 5 bis 25 Gew.% bezogen auf das TPE bzw. POM zugegeben sind.

6. Verbundkörper nach einem oder mehreren der vorstehenden Ansprüche 1 bis 5, **gekennzeichnet durch** eine bessere Verbundhaftung bei einstufigem Mehrkomponentenspritzguß gegenüber zweistufigem Mehrkomponentenspritzguß nach Insertmolding.

7. Verfahren zum Herstellen des Verbundkörpers nach einem oder mehreren der vorstehenden Ansprüche, **gekennzeichnet durch** ein Mehrkomponentenspritzgußverfahren in einstufiger Form, insbesondere **durch** Dreh-, Indexplatten-, Schieber-, Umsatz-, Koinjektions-/Sandwichtechnik, oder in mehrstufiger Form **durch** Einlegeverfahren oder im Mehrkomponentenextrusionsverfahren, insbesondere Coextrusion.

8. Verwendung des Verbundkörpers nach einem oder mehreren der vorstehenden Ansprüche, hergestellt durch das Verfahren gemäß Anspruch 6, als Befestigungsclips mit Dichtung im Fahrzeugbau, oder als Befestigungselement mit Dämpfungsfunktion für Kraftstoffleitungen, als Schiebeschalter mit rutschfester Grifffläche, als Gehäuse für Türschlösser mit angespritzter Dichtung, als Verkleidung für Armaturenbretter, Seitenteile und Dachhimmel im Kraftfahrzeugbau.

## Claims

1. A composite body, comprising:
a hard component (a) of a polyacetal, namely polyoxymethylene (POM) and
a soft component (b) of one or more thermoplastic styrene elastomers (TPE), namely hydrogenated styrene block copolymer(s), which is moulded directly on to component (a),
wherein
the styrene block copolymer(s) are poly-isoprene/butadiene polymer(s) and/or poly-butadiene polymer(s)
and in that the styrene block copolymer(s) are adhesion-modified,
**characterized in that**
styrene/butadiene copolymer (SBS) and/or ethylene/vinyl acetate copolymer (EVA),
are added as modifiers of the styrene block copolymer(s).

2. Composite body according to claim 1, **characterized in that** one or more of the following substances are added as modifiers of the polyoxymethylene:
styrene/butadiene copolymer (SBS),
ethylene/vinyl acetate copolymer (EVA),
hydrogenated styrene block copolymer based on a hydrogenated poly-isoprene/butadiene rubber (SEEPS),
hydrogenated styrene block copolymer based on a hydrogenated poly-isoprene rubber (SEPS),
hydrogenated styrene block copolymer based on a hydrogenated poly-butadiene rubber (SEBS),
compound based on a hydrogenated styrene block copolymer which can be present as hydrogenated poly-isoprene/butadiene rubber (SEEPS) or as hydrogenated poly-isoprene rubber (SEPS) or as hydrogenated poly-butadiene rubber (SEBS),
olefinic substances, such as PE, PP,
polystyrene (PS), ABS, PC, SAN, TPE-U.

3. Composite body according to claim 2, **characterized in that** the POM is built up from a formaldehyde homopolymer or formaldehyde copolymer or its cyclic oligomers and cyclic ethers, cyclic acetals and/or linear acetals.

4. Composite body according to claim 3, **characterized in that** the POM has a melt index (MFR according to ISO 1133) of between 0.5 and 75 g/10 min.

5. Composite body according to one or more of the preceding claims, **characterized in that** the modifiers of the styrene block copolymer(s) or of the polyoxymethylene are added in a weight range from 5 to 25 wt.%. based on the TPE or POM.

6. Composite body according to one or more of the preceding claims 1 to 5, **characterized by** a better bonding adhesion in one-stage multicomponent injection moulding compared with two-stage multicomponent injection moulding by insert moulding.

7. Process for the production of the composite body according to one or more of the preceding claims, **characterized by** a multicomponent injection moulding process in a one-stage form, in particular by the rotary, index plate, slider, transfer or co-injection/sandwich technique, or in a multi-stage form by the insert process or by the multicomponent extrusion process, in particular coextrusion.

8. Use of the composite body according to one or more of the preceding claims, produced by the process according to claim 6, as fixing clips with a seal in vehicle construction, or as a fixing element with a damping function for motor fuel lines, as a sliding switch with a non-slip touch surface, as a housing for door locks with a seal injection-moulded on, or as lining for dashboards, side components and sun-roofs in motor vehicle construction.

## Revendications

1. Corps composite, comprenant :
une composante dure (a) composée d'un polyacétal, à savoir le polyoxyméthylène et
une composante molle (b) composée d'un ou plusieurs élastomères de styrène thermoplastiques, à savoir un/des copolymère/s de styrène en masse hydrogéné/s qui est moulé directement sur la composante (a),
le voire les copolymère/s de styrène en masse étant un voire des polymère/s de polyisoprène-butadiène et/ou un voire des polymère/s de polybutadiène,
et le/les copolymère/s de styrène en masse ayant subi une modification d'adhésivité,
**se caractérisant par le fait qu'**
un copolymère de styrène-butadiène et/ou
un copolymère de vinylacétate-éthylène sont ajoutés
en tant que modificateurs du voire des copolymère/s de styrène en masse.

2. Corps composite selon la revendication 1, **se caractérisant par le fait que** les modificateurs du polyoxyméthylène se composent de l'une ou de plusieurs substances suivantes :
copolymère de styrène-butadiène (SBS),
copolymère de vinylacétate-éthylène (EVA),
copolymère de styrène en masse hydrogéné, basé sur un caoutchouc de polyisoprène-butadiène hydrogéné (SEEPS),
copolymère de styrène en masse hydrogéné, basé sur un caoutchouc de polyisoprène hydrogéné (SEPS),
copolymère de styrène en masse hydrogéné, basé sur un caoutchouc de polybutadiène hydrogéné (SEBS),
composite sur la base d'un copolymère de styrène en masse hydrogéné qui peut se présenter sous forme de caoutchouc de polyisoprène-butadiène hydrogéné voire de caoutchouc de polyisoprène hydrogéné (SEPS) voire de caoutchouc de polybutadiène hydrogéné (SEBS),
substances à l'oléfine telles que PE, PP,
polystyrène (PS) ABS, PC, SAN, TPE-U.

3. Corps composite selon la revendication 2, **se caractérisant par le fait que** le POM est élaboré à partir d'homopolymères d'aldéhyde formique ou de copolymères d'aldéhyde formique ou de ses oligomères cycliques et éthers cycliques, acétals cycliques et/ou acétals linéaires.

4. Corps composite selon la revendication 3, **se caractérisant par le fait que** le POM présente un indice de fusion (MFR selon ISO1133) entre 0,5 et 75 g/10 min.

5. Corps composite selon l'une ou plusieurs revendications précédentes, **se caractérisant par le fait que** les modificateurs du voire des copolymère/s de styrène en masse ou du polyoxyméthylène sont ajoutés dans une marge de poids de 5 à 25 % en poids en fonction du TPE voire du POM.

6. Corps composite selon l'une ou plusieurs revendications précédentes 1 à 5, **se caractérisant par** une meilleure adhérence composite lors du moulage par injection de plusieurs composantes en une phase par rapport au moulage par injection de plusieurs composantes en deux phases selon le procédé de l'insertmolding.

7. Procédé pour la fabrication du corps composite selon l'une ou plusieurs revendications précédentes, **se caractérisant par le fait qu'**un processus de moulage par injection de plusieurs composantes sous forme d'une phase, en particulier par la technique de rotation, de plaques d'index, de vanne, de conversion, de coinjection/sandwich ou sous forme de plusieurs phases par la technique d'insertion ou dans un procédé d'extrusion à plusieurs composantes, en particulier la coextrusion.

8. Emploi du corps composite selon l'une ou plusieurs revendications précédentes, fabriqué selon le procédé conformément à la revendication 6, en tant que clips de fixation avec joint pour la construction automobile ou en tant qu'élément de fixation à fonction d'amortissement pour les conduites de carburant, en tant qu'interrupteur à coulisse avec surface antidérapante, en tant que boîtier pour les serrures de porte avec joint injecté, en tant que revêtement pour les tableaux de bord, les parties latérales et les habillages de plafond dans la construction automobile.
